(19) Europäisches Patentamt / European Patent Office / Office européen des brevets

(11) **EP 2 230 639 A1**

(12) **EUROPEAN PATENT APPLICATION**

(43) Date of publication:
**22.09.2010 Bulletin 2010/38**

(51) Int Cl.:
***G06Q 10/00*** *(2006.01)*

(21) Application number: **10156472.2**

(22) Date of filing: **15.03.2010**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA ME RS**

(30) Priority: **17.03.2009 US 405794**

(71) Applicant: **Kraft Foods Global Brands LLC Northfield, IL 60093 (US)**

(72) Inventor: **Edwards, Jay Anthony Madison, WI 53718 (US)**

(74) Representative: **HOFFMANN EITLE Patent- und Rechtsanwälte Arabellastrasse 4 81925 München (DE)**

(54) **Method and apparatus to facilitate assessing environmental-impact information as pertains to packaging**

(57)    A first memory (1203) has environmental-impact information stored therein regarding at least the provision of specific packaging materials, use of specific packaging materials, and post-use processing of specific packaging materials. A second memory (1204) has packaging information stored therein. A computer (1201) having access to these memories processes (104) the packaging information as a function, at least in part, of the environmental-impact information to calculate a single corresponding value to represent a score as pertains to the overall environmental impact of the packaging. This single corresponding value is then presented (105) to a user. A user interface (1206) will permit a user to enter the aforementioned packaging information and/or to receive the aforementioned single corresponding value. An optional third memory (1205) can store at least one weighting factor as pertains to environmental impact that can be used when calculating the value.

100 — PROVIDE A FIRST MEMORY HAVING ENVIRONMENTAL-IMPACT INFORMATION STORED THEREIN REGARDING AT LEAST PROVISION OF SPECIFIC PACKAGING MATERIALS, USE OF SPECIFIC PACKAGING MATERIALS, AND POST-USE PROCESSING OF SPECIFIC PACKAGING MATERIALS

101 — PROVIDE A USER INTERFACE THAT OPERABLY COUPLES TO A SECOND MEMORY TO PERMIT A USER TO ENTER PACKAGING INFORMATION TO FACILITATE STORAGE OF THE PACKAGING INFORMATION

102 — PROVIDE A SECOND MEMORY HAVING PACKAGING INFORMATION STORED THEREIN

103 — PROVIDE A THIRD MEMORY HAVING AT LEAST ONE WEIGHTING FACTOR AS PERTAINS TO ENVIRONMENTAL IMPACT STORED THEREIN

104 — USE A COMPUTER TO ACCESS THE FIRST MEMORY AND THE SECOND MEMORY AND TO PROCESS THE PACKAGING INFORMATION AS A FUNCTION, AT LEAST IN PART, OF THE ENVIRONMENTAL-IMPACT INFORMATION TO CALCULATE A SINGLE CORRESPONDING VALUE TO REPRESENT A SCORE AS PERTAINS TO OVERALL ENVIRONMENTAL IMPACT OF THE PACKAGING

105 — PRESENT THE SINGLE CORRESPONDING VALUE TO A USER TO FACILITATE THE USER'S SELECTION OF PARTICULAR PACKAGING MATERIALS

*FIG. 1*

EP 2 230 639 A1

**Description**

Technical Field

This invention relates generally to packaging materials and to the assessment of corresponding environmental impacts.

Background

Manufacturing enterprises can impact the environment in various ways, sometimes negatively. The materials and processes used to package manufactured goods, for example, can have a number of environmental impacts. Increasingly, responsible manufacturers seek to at least reduce at least some negative environmental impacts as correspond to their packaging choices.

Unfortunately, this is not as simple as it might seem. This is due, at least in part, to the differing kinds of environmental impacts that a given approach to packaging can present. A non-packaging related example may be illustrative in these regards. A recent study sought to answer the question, which is more environmentally friendly - disposable diapers or reusable diapers? On the one hand, disposable diapers create greater disposal problems (at least with respect to volume). On the other hand, reusable diapers require washing (typically in warm or hot water) and create greater ongoing energy-usage problems. In the final analysis, it might be fairly concluded that neither option is clearly superior in these regards.

Complicating matters is that these kinds of studies often end up requiring a kind of apples-to-oranges comparison; which of these, for example, is environmentally worse - the ongoing increased fossil fuel-consumption requirements of an automobile with a standard internal combustion engine or the upfront increased environmental impact of nickel mining as corresponds to a modem day hybrid vehicle?

Present attempts to provide information and tools to manufacturers regarding the environmental merits and problems associated with various packaging options tend to be relatively unhelpful due to these and other related problems. Available prior art approaches either tend to emphasize an overly-narrow point of view and/or yield a plurality of results that, in the end, are very difficult for the end user to compare and apply in their day-to-day decision making. Such technical challenges are therefore seen to pose a significant impediment to making responsible decisions in these regards.

Brief Description of the Drawings

The above needs are at least partially met through provision of the method and apparatus to facilitate assessing environmental-impact information as pertains to packaging described in the following detailed description, particularly when studied in conjunction with the drawings, wherein:

FIG. 1 comprises a flow diagram as configured in accordance with various embodiments of the invention;

FIG. 2 comprises a screen shot as configured in accordance with various embodiments of the invention;

FIG. 3 comprises a screen shot as configured in accordance with various embodiments of the invention;

FIG. 4 comprises a screen shot as configured in accordance with various embodiments of the invention;

FIG. 5 comprises a screen shot as configured in accordance with various embodiments of the invention;

FIG. 6 comprises a screen shot as configured in accordance with various embodiments of the invention;

FIG. 7 comprises a screen shot as configured in accordance with various embodiments of the invention;

FIG. 8 comprises a screen shot as configured in accordance with various embodiments of the invention;

FIG. 9 comprises a screen shot as configured in accordance with various embodiments of the invention;

FIG. 10 comprises a screen shot as configured in accordance with various embodiments of the invention;

FIG. 11 comprises a screen shot as configured in accordance with various embodiments of the invention; and

FIG. 12 comprises a block diagram as configured in accordance with various embodiments of the invention.

Skilled artisans will appreciate that elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present invention. Also, common but well-understood elements that are useful or necessary in a commercially feasible embodiment are often not depicted in order to facilitate a less obstructed view of these various embodiments of the present invention. It will further be appreciated that certain actions and/or steps may be described or depicted in a particular order of occurrence while those skilled in the art will understand that such specificity with respect to sequence is not actually required. It will also be understood that the terms and expressions used herein have the ordinary technical meaning as is accorded to such terms and expressions by persons skilled in the technical field as set forth above except where different specific meanings have otherwise been set forth herein.

Detailed Description

Generally speaking, pursuant to these various embodiments, a first memory has environmental-impact information stored therein regarding at least the provision of specific packaging materials, use of specific packaging materials, and post-use processing of specific packaging materials. A second memory has packaging information stored therein (as pertains, for example, to one or more packaging choices being considered by a manufacturer). A computer having access to these memories then processes the packing information as a function, at least in part, of the environmental-impact information to calculate a single corresponding value to represent a score as pertains to the overall environmental impact of the packaging. This single corresponding value is then presented to a user.

These teachings will further accommodate employing a user interface to permit a user to enter the aforementioned packaging information and/or to receive the aforementioned single corresponding value. By another approach, these teachings will also optionally accommodate providing a third memory having at least one weighting factor as pertains to environmental impact. This weighting factor can reflect recommendations, preferences, and/or other biases as may correspond to the manufacturer, an industry group, local regulations, and so forth. Such a weighting factor can be used and applied when calculating the aforementioned single corresponding value.

These teachings therefore serve to take into account a full spectrum of environmental concerns as pertain to a given packaging choice and to consolidate a possible wide range of environmental concerns into a single, easy-to-understand result. By one approach, for example, the single corresponding value can be bounded by a lower and upper range (such as, for example, 0 to 100) where a lower value corresponds to a reduced environmental impact. This, in turn, can facilitate making better decisions, with less corresponding training, in a considerably reduced period of time.

Those skilled in the art will appreciate that these teachings will readily leverage existing information regarding environmental considerations for various materials and processes but will also likely easily accommodate subsequently-developed information in these regards as well. It will also be understood and appreciated that these teachings are highly scalable and will readily accommodate a large volume of information and a wide variety of differing kinds of information.

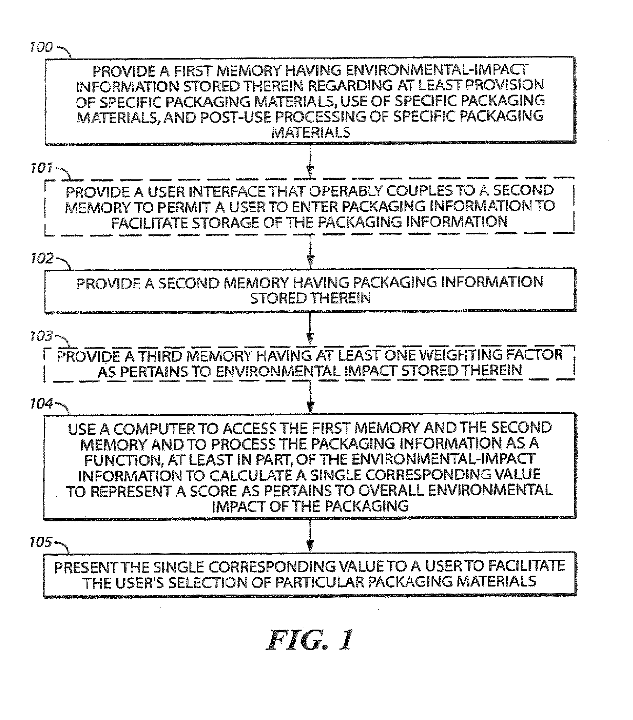

These and other benefits may become clearer upon making a thorough review and study of the following detailed description. Referring now to the drawings, and in particular to FIG. 1, an illustrative process that is compatible with many of these teachings will now be presented.

This process includes the step 100 of providing a first memory. This memory has environmental-impact information stored therein, which information regards (at the least): (1) the provision of specific packaging materials; (2) the use of specific packaging materials; and (3) post-use processing of specific packaging materials.

Those skilled in the art will recognize that these categories can encompass a considerable amount and variety of content. For example, the information relating to the provision of specific packaging materials can comprise information regarding one or more of:

**[0027]** - an environmental impact associated with obtaining at least one raw material (such as, for example, an impact upon the availability of a scarce commodity, an impact upon the local environs to obtain the raw material, an impact upon ground water supplies or an impact associated with the release of green house gases as result from obtaining the raw material, and so forth);

**[0028]** - an environmental impact associated with processing at least one raw material (such as, for example, energy use associated with such processing, an impact corresponding to residual materials (including materials in gas, liquid, or solid form) that are a byproduct of processing the raw materials, and so forth);

**[0029]** - an environmental impact associated with transporting at least one of a raw material and a processed raw material (such as, for example, a release of greenhouse gases as result from energy sources consumed to power such transportation, environmental impact attributable to transportation infrastructure requirements, and so forth);

**[0030]** - an environmental impact associated with creating the specific packaging material (such as, for example, environmental impacts attributable to utilized energy sources, issues pertaining to residual byproducts (such as the environmental impact of creating, releasing, storing, transporting, and/or disposing of such byproducts, and so forth); and

**[0031]** - an environmental impact associated with an amount of post-consumer-recycled content in the specific packaging materials (which can comprise, in some application settings, a positive environmental impact as can other of the examples noted above).

The aforementioned information regarding use of specific packaging materials can comprise, for example and at least in part, information regarding at least one of:

**[0033]** - an environmental impact associated with energy requirements to use the specific packaging materials; and

**[0034]** - an environmental impact associated with associated waste as corresponds to use of the specific packaging materials (such as, but not limited to, un-used material, effluent run-off, and so forth).

In turn, the information regarding post-use processing of specific packaging materials can comprise, at least in part, information regarding an environmental impact associated with disposal of the specific packaging materials. Such information can relate, directly or indirectly and by way of example, to recycling rates as are known to a given industry and/or as are known to the enterprise.

Generally speaking, this information in the first memory can be extracted from any of a variety of public and private sources (and indeed, considerable such information is already available) and/or can be developed (or embellished and refined) by the enterprise that employs these teachings.

This process also includes the step 102 of providing a second memory having packaging information stored therein. To facilitate this step 102, if desired, this process will optionally include the step 101 of also providing a user interface that operably couples to this second memory to thereby permit a user to enter part or all of this packaging information to thereby facilitate the aforementioned storage thereof. From a hardware standpoint this user interface can comprise any mechanism and approach to receive user input with examples including, but not being limited to, full and partial keyboards and keypads, cursor-control devices of various kinds, speech recognition interfaces, and so forth. From a more contextual point of view, this user input can include, for example, a spreadsheet-based interface (relying upon, for example, the Excel spreadsheet program or the like).

This packaging information can pertain, for example, to a single complete packaging approach or to only a portion thereof as desired. This packaging information can also pertain, if desired, to a plurality of differing packaging approaches to thereby permit a corresponding comparison. By one approach, for example, such packaging information can comprise information regarding a container for a given product (such as a consumable product such as a foodstuff). This can include specifically identified boxes, wrappers, or the like. By way of another example, such packaging information can comprise information regarding materials content of the identified packaging. This can include specifically identified paper products (for example, cardboard and paperstock of various kinds, corrugated or otherwise), specific metals, specific plastics, and so forth along with identified quantities thereof.

This process will also optionally accommodate the step 103 of providing a third memory having at least one weighting factor as pertains to environmental impact stored therein. Such a weighting factor can be employed, for example, to represent an economically-based, politically-based, legally-based, and/or environmental-predilection-based preference held by the enterprise, a corresponding industry or governmental authority, or otherwise. For example, a given enterprise might wish to discourage the use of a particular material the mining of which is being faulted for culturally destabilizing certain indigenous peoples notwithstanding that this particular material is otherwise viewed as having a favorable environmental impact. As another example, a given industry might wish to emphasize a preference for using processes that can be undertaken using a particular alternative fuel.

These weighting factors can range from being mild in effect to being highly determinative depending upon the strength of the weighting. This, in turn, permits the weighting factor to be selected to represent the corresponding strength of the implied recommendation. Though not necessary to the useful practice of these teachings, such weighting factors can prove very beneficial with respect to resolving apples-to-oranges comparisons that can otherwise present a potentially intractable selection dilemma.

In any event, this process also provides the step 104 of using a computer to access these various memories and to process the packing information as a function, at least in part, of the environmental-impact information (and the weighting factor(s) when present and utilized) to calculate a single corresponding value that represents a score as pertains to the overall environmental impact of the packaging. By way of example and with no intent of suggesting any limitations in these regards, this value might have an allowable range of 0 to 100, with lower values representing a more favorable environmental result. Those skilled in the art will recognize that such a value can be calculated using any of a wide variety of formulas where the particulars of the formula can reflect the particular emphasis that may be desired to suit the requirements and/or opportunities as tend to characterize a given application setting.

By one approach (and merely by way of example), such a value can be calculated by combining (for example, by adding) the environmental-impact contributions of such factors as correspond to material use, recycled content, carbon dioxide emissions, energy usage, and case volume (the latter referring to the size of the packaging and which is also sometimes known as "case cube") (where, if desired, the case volume value can itself be divided by the corresponding net weight) and then dividing that result by an amount or volume of interest (such as the net weight of the packaging under consideration or the number of servings accommodated by the packaging). If desired, the relative contribution of each such factor can be weighted to reflect, for example, the preferences of the user. For example, the aforementioned general factors can be weighted as follows:

$$40\% \text{ material use} + 20\% \text{ recycled content} + 10\% \text{ CO2} + 10\% \text{ energy} + 20\% \text{ case}$$
$$\text{volume/net weight.}$$

Such a value can be used in conjunction, if desired, with some minimally required threshold value. For example, a given enterprise might demand that its packaging all equal or better a value of 50. These values will also support useful comparisons between available packaging options. For example, this step 104 of using the computer to obtain such a result can comprise processing packaging information for a first packaging option to thereby calculate a first single corresponding value that represents the environmental-impact score for the first packaging option and also using the computer to do the same for a second, different packaging option. These resultant scores can then be readily compared to one another to identify which packaging option is generally less detrimental and/or most beneficial to the environment.

This process then also provides the step 105 of presenting the aforementioned single corresponding value (i.e., the environmental-impact score) to a user to facilitate the user's selection of a particular approach to packaging. This step 105 can comprise using a corresponding user interface such as, but not limited to, an active display or a printer. This step 105 will also accommodate presenting this information on a local basis (that is, as a part of the aforementioned computer) and/or on a remote basis (by uploading this information to a corresponding server, by automatically forming and sending a corresponding email, text message, or the like, and so forth). Various approaches are known in the art in this regard. As these teachings are not overly sensitive to any particular selection in this regard, for the sake of brevity and the preservation of clarity, further elaboration in this regard will not be presented here.

As noted earlier, these teachings can be readily implemented using a spreadsheet platform. A specific example in these regards will now be presented. Those skilled in the art will recognize and understand that this example is intended to serve only in an illustrative capacity and is not intended to comprise an exhaustive listing of all possibilities in this regard. In this particular illustrative example the spreadsheet comprises three separate tabs. Each will be described in turn.

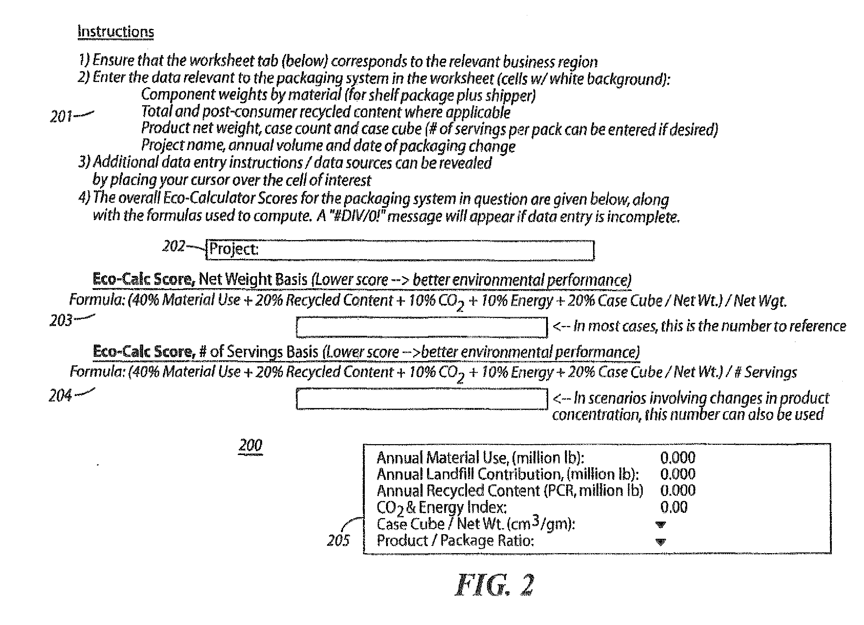

Referring now to FIG. 2, a first tab 200 comprises instructions 201 regarding use of this tool to determine an environmental-impact rating for a given packaging system. This tab 200 also provides a free-text area 202 where the user can enter a corresponding project name for the packaging system being rated. This tab 200 then further provides, in this illustrative example, a first environmental-impact score presentation-and-summarization area 203 (based upon a net-weight approach wherein the above-described formula is divided by the net weight of the packaging system) and a second environmental-impact score presentation-and-summarization area 204 (based upon a number-of-servings approach wherein the above-described formula is divided by the number of servings accommodated by the packaging system). Further details in this regard will be provided below where appropriate.

(Although two different environmental-impact values are offered in such an approach, it will be understood by those skilled in the art that only one such value will typically be used and relied upon by the user in a given application setting. The particular value so utilized will typically depend upon which of these two differing approaches best matches the characterizing attributes of the packaging system being assessed. In any event, it will be clearly understood that each of these resultant values comprises, in and of itself, a single comprehensive value to represent a broad spectrum of environmental impacts associated with a given packaging system.)

Lastly, this tab 200 includes a supplemental information, area 205 where summarized and/or consolidated information pertaining to the packaging system can be presented for the further edification and consideration of the user. Such information can serve as a secondary basis upon which to accept, or reject, the selection of a particular packaging system. Such information can also aid, in some instances, with gaining an understanding regarding why a particular packaging system yields a particular resultant environmental-impact value.

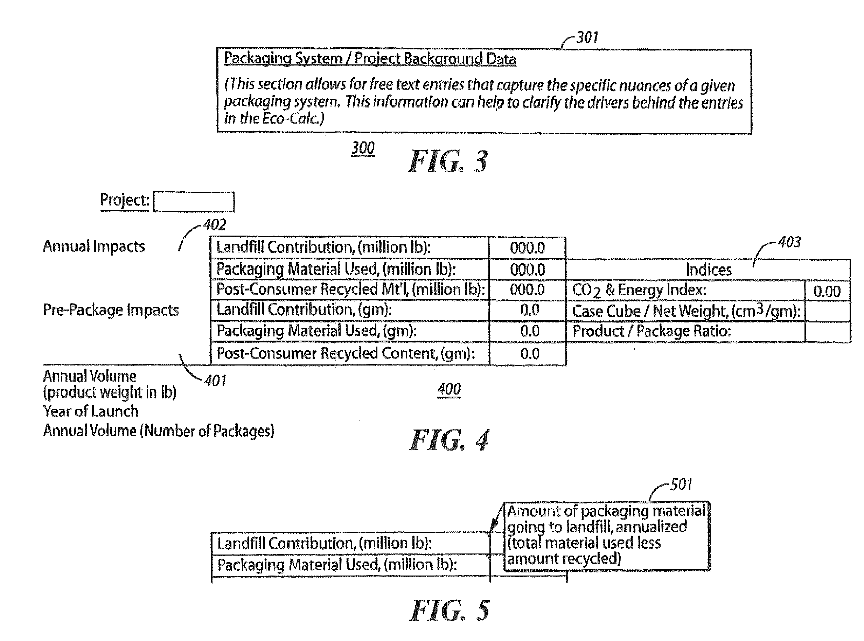

Referring now to FIG. 3, a second tab 300 provides a free-text area 301 where the user can enter and review whatever information might be useful to present and consider when assessing the environmental-impact score for a given packaging system. Such a capability can be particularly useful when the tool is shared amongst a larger and/or distributed user base. This capability can also prove useful as an archival mechanism when reviewing, at some later date, the reasons why a particular packaging system was adopted or rejected.

The third tab in this illustrative example provides an opportunity for the user to enter the information as pertains to the packaging system being evaluated. This tab includes a number of discrete work and presentation areas that will now be described over a number of corresponding figures.

Referring now to FIG. 4, a first area 400 presents various subtotals as correspond to information that the user has entered elsewhere in this third tab. One area 401, for example, presents subtotals as pertain to certain environmental-impact sub-categories (such as landfill impact, the amount of packaging material utilized, and the amount of post-consumer recycled content to be employed) relating to a per-package view of the selected approach (as versus, for example, an annualized view of the selected approach. Another area 402 in this example presents subtotals as pertain to these same sub-categories as viewed on an annualized basis. Yet another area 403 presents information regarding certain indices of interest (such as a carbon dioxide and energy index and so forth).

As will be well understood by those skilled in the art, pop-up informational balloons can be utilized to assist the user with reviewing and understanding such content. Using this approach, an information balloon will pop-up on the display when a cursor is positioned over a field of interest for at least some period of time. An illustrative example in this regard appears in FIG. 5. In this example, the cursor has been placed over the value field as corresponds to the annualized landfill contribution subcategory. This, in turn, has prompted the display of a corresponding balloon 501 that provides explanatory material regarding the contents of that selected field. Such an approach can greatly facilitate providing a user with information they might require to make effective use of the tool while avoiding an overly cluttered screen.

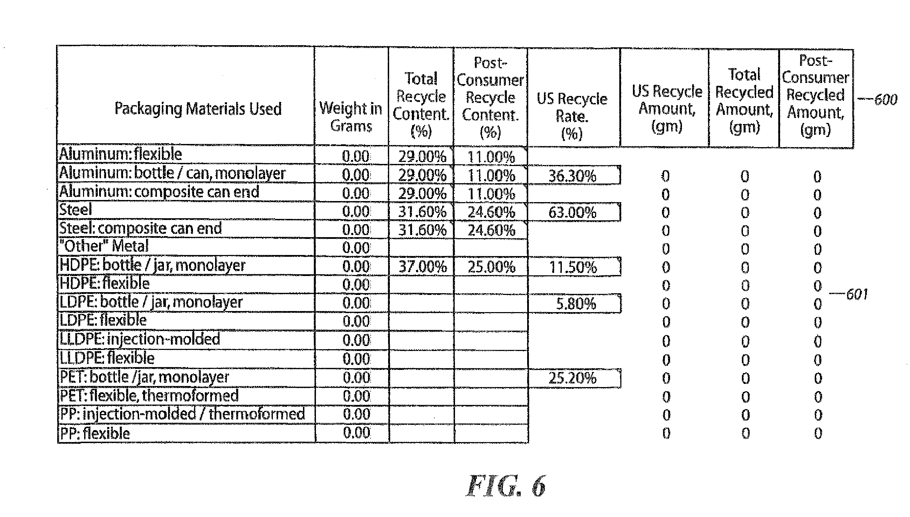

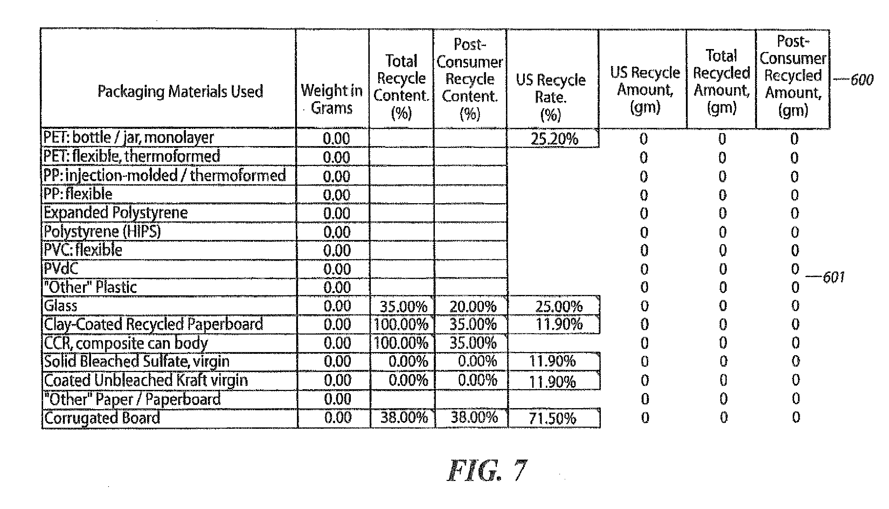

Referring now to FIGS. 6, 7, and 8, another portion of the user interface provides information 601 regarding various packaging materials and provides an opportunity for the user to enter information that is specific to the particular packaging system being considered. This information comprises a plurality of rows that can be scrolled beneath a static header section 600 that provides general characterizations for each of the columns. This header section 600 denotes (in this example) particular packaging materials (such as "aluminum: composite can end," "PET: bottle & jar, monolayer," and "corrugated board" to note but a few), a column entitled "weight in grams" that the user can utilize to enter the corresponding amounts for the particular packaging system being considered, total recycling content (in percent) (as gleaned from reliable sources regarding industry practice), post-consumer recycling content (in percent) (again as gleaned from reliable sources), and the recycling rate (in percent) in the United States (from reliable sources).

This header section 600 also denotes three columns that comprise calculated values based upon the foregoing for each discrete packaging material. In this example these values are the resultant expected recycling amount (in grams in the United States) (determined, for example, by multiplying the weight of the packaging material by the corresponding US recycling rate for this particular packaging material), the total expected recycled amount (in grams) (determined, for example, by multiplying the weight of the packaging material by the total recycling content value for this particular packaging material), and the amount of expected post-consumer recycled content (again in grams) (determined by multiplying the weight of the packaging material by the post-consumer recycling content percentage value).

By one approach, if desired, the static content in the information area 601 can be supplemented with pop-up balloons that appear when the user's cursor dwells on a particular item of static content. Such an approach can serve, for example, to provide information regarding the source (or sources) of the static information, information regarding any assumptions that relate to use of the static information, a date as corresponds to the static information, and so forth.

So configured, a user can simply locate the specific packaging materials as correspond to their particular packaging system and enter the corresponding weight (in grams, in this example) for each such material. The spreadsheet can then automatically calculate the above-described information regarding resultant recycling treatment of each such material using already-gleaned and vetted information from whatever sources the enterprise considers reliable.

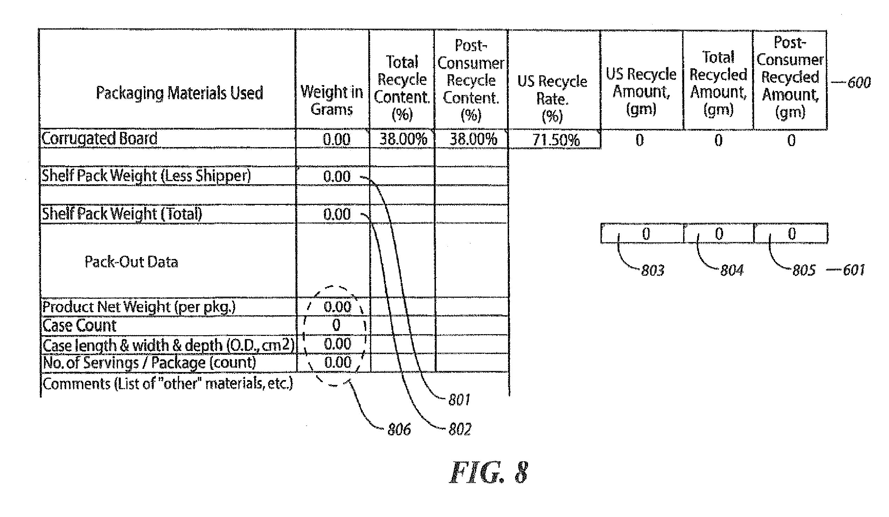

Referring now specifically to FIG. 8, this information area 601 also includes some automatically calculated totals of interest. These include:

[0058]    - a shelf pack weight (denoted by reference numeral 801) for the packaging system (less shipping materials such as corrugated board) (determined here by summing the weight in grams as entered by the user for each of the selected packaging materials with the exception, here, of any corrugated board values);

[0059]    - a total shelf pack weight (denoted by reference numeral 802) for the packaging system (including shipping materials such as corrugated board) (determined here by summing the weight in grams as entered by the user for all of the selected packaging materials including the corrugated board values);

[0060]    - a total US recycling amount (denoted by reference numeral 803) for the packaging system (determined here by summing all of the US recycling amounts for each of the selected packaging materials);

[0061]    - a total recycling amount value (denoted by reference numeral 804) for the packaging system (determined here by summing all of the total recycled amount values for each of the selected packaging materials); and

[0062]    - a total post-consumer recycled amount (denoted here by reference 805) for the packaging system (determined here by summing all of the total post-consumer recycled amount values for each of the selected packaging materials.

Lastly, this information area 601 also includes an opportunity for the user to enter some additional information regarding the packaging system and the corresponding product (as denoted by reference numeral 806. In this illustrative example, this additional information comprises a net weight for the overall product (on a per package basis), a case count (that is, the number of packages to be contained within a case), relevant dimensions (i.e., length, width, and depth in centimeters) for such a case, and the number of servings (i.e., food or drink servings) contained in each package.

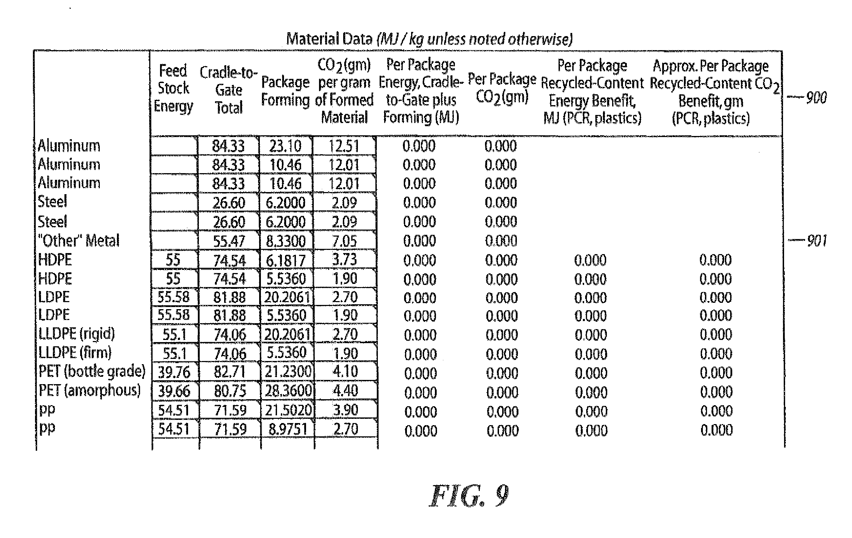

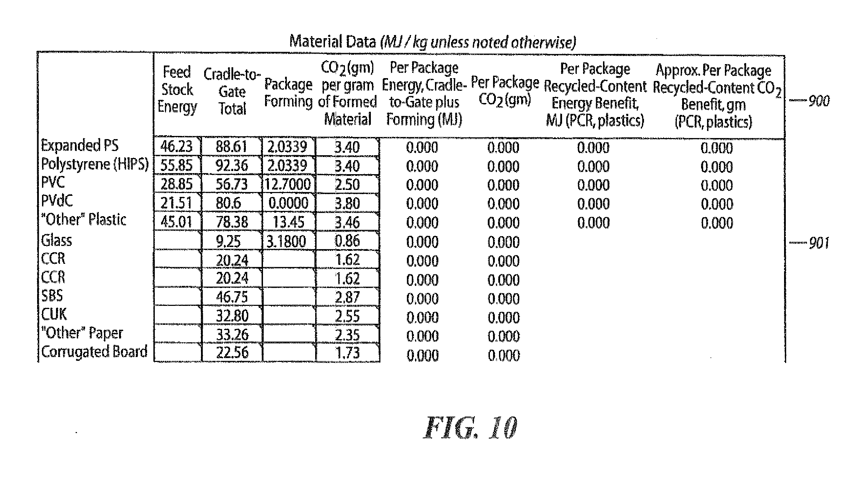

Referring now to FIGS. 9, 10, and 11, this spreadsheet tab includes a final information area 901 that relates to energy consumption and carbon dioxide production as pertains to the above-noted packaging materials. This area of the tab again includes a helpful header section 900 that identifies the various columns of this tab. In this example, and again for each of the listed packaging materials, the header section 900 identifies a feedstock energy, value, a cradle-to-grave energy consumption total, a package formation energy formation value, and a corresponding carbon dioxide emissions value (in grams). These values can comprise static information with which the spreadsheet is pre-populated for each of the available packaging materials (to the extent feasible) prior to being used in a particular instance by the user. And again, pop-up balloons can serve to provide the user with information regarding these individual values (including, for example, the source for the value).

This header section 900 includes another column in this illustrative example captioned "per package energy, cradle-to-grave plus forming." This column hosts calculated values for each of the packaging materials for the metric indicted (determined here by dividing the weight for the particular corresponding packaging material by 1,000 and then multiplying that result by the sum of the cradle-to-grave total and the package forming value for this particular packaging material).

Another related column is denoted "per package $CO_2$." This column presents calculated values for each of the packaging materials for the metric indicated (determined here by multiplying the weight for the particular corresponding packaging material by the value provided for the $CO_2$-per-gram-of-formed-material metric).

This embodiment includes two other columns of calculated values. One column is denoted "per package recycled-content energy benefit" and presents calculated values for many of the packaging materials for the metric indicated (determined here by dividing the weight of the particular packaging material by 1,000 and then multiplying that result by both the aforementioned post-consumer-recycle-content value and the feedstock-energy value). The remaining column is denoted "approximate per package recycled-content $CO_2$ benefit" and presents calculated values for many of the packaging materials for the metric indicated (determined here by dividing the relevant feedstock-energy value by the sum of the cradle-to-grave total and the package forming value and then multiplying that result by each of the weight of the packaging material, the post-consumer-recycle-content value, and the $CO_2$-per-gram-of-formed-material value).

The particular packaging materials shown are intended to serve an illustrative purpose. While these likely comprise a comprehensive listing for many enterprises, the degree to which these materials are appropriate for use by a given enterprise in a given industry will of course vary as packaging requirements vary. This listing, and the indicated values, can of course be updated from time to time by a corresponding administrator to accommodate alterations, deletions, and additions as they occur or otherwise.

Returning now to FIG. 3, many of the values available at this location of this tab are themselves calculated using the various ones of the above-mentioned values. For example:

[0070]  - The landfill contribution for the per-package impacts metric can be calculated by subtracting the aforementioned US recycle amount for the total shelf pack from the total shelf pack weight;

[0071]  - The landfill contribution for the annual impacts metric can be calculated by multiplying the aforementioned landfill contribution for the per-package impact by each of the annual volume (as a number of packages) and the value 0.002204623 (to convert from grams to pounds) and then dividing the result by 1,000,000;

[0072]  - The packaging material used for the per-package impacts metric can equal the aforementioned total shelf pack weight;

[0073]  - The packaging material used for the annual impacts metric can be calculated by multiplying the aforementioned packaging material value (for the per-package impacts metric) by each of the annual volume (as a number of packages) and the value 0,002204623 and then dividing the result by 1,000,000;

[0074]  - The post-consumer recycled content value for the per-package impacts metric can equal the aforementioned value for the post-consumer recycled amount metric for the total shelf pack;

[0075]  - The post-consumer recycled material value (for the annual impacts metric) can be calculated by multiplying the aforementioned post-consumer recycled content value by each of the annual volume (as a number of packages) and the value 0.002204623 and then dividing the result by 1,000,000;

[0076]  - The $CO_2$ & energy index can be calculated by dividing the sum total of all cradle-to-grave values for the particular packaging system by 650 and then multiplying the result by the sum total of all per-package energy, cradle-to-grave plus forming values for the particular packaging system as divided by 20;

[0077]  - The case volume/net weight can be calculated by dividing the case dimensions by the product of the product net weight (per package) and the corresponding case count; and

[0078]  - The product/package ratio can be calculated by dividing the product net weight (per package) by shelf pack weight (less the shipping materials).

Referring now again to FIG. 2, in this particular illustrative example, the net-weight-basis version of an overall environmental-impact score 203 can be calculated as follows:

$$((((0.4*(1/500)*\text{packaging material used (for per-package impacts)})+(0.2*(0-\text{post-consumer recycled content (for per-package impacts)})/500)+(0.1*(1/650)*\text{cradle-to-grave total for per-package } CO_2)+(0.1*(1/20)*\text{total per-package energy, cradle-to-grave plus forming value})+(0.2*(1/70)*(\text{case volume/net weight})))*100)/\text{total net weight per package})*1000.$$

Also in this illustrative example, the number-of-servings-based environmental impact score 204 can be calculated as follows:

$$(((0.4*(1/500)* \text{ packaging material used (for per-package impacts)}+(0.2*(0-\text{post-consumer recycled content (for per-package impacts)})/500)+(0.1*(1/650)* \text{ cradle-to-grave total for per package } CO_2)+(0.1*(1/20)* \text{ total per package energy, cradle-to-grave plus forming value})+(0.2*(1/70)*( \text{ case volume/net weight})))*100)/\text{total number of servings per package.}$$

Those skilled in the art will recognize that other formulations can be applied as desired. It will also be understood that the weighting factors used in these equations (for example, the 0.4 weighting factor as applied in conjunction with the "packaging material used (for per-package impacts)" value) can be selected as desired to emphasize, or deemphasize, particular categories and kinds of environmental impacts to best reflect the requirements, preferences, and/or opportunities as may tend to characterize a given application setting.

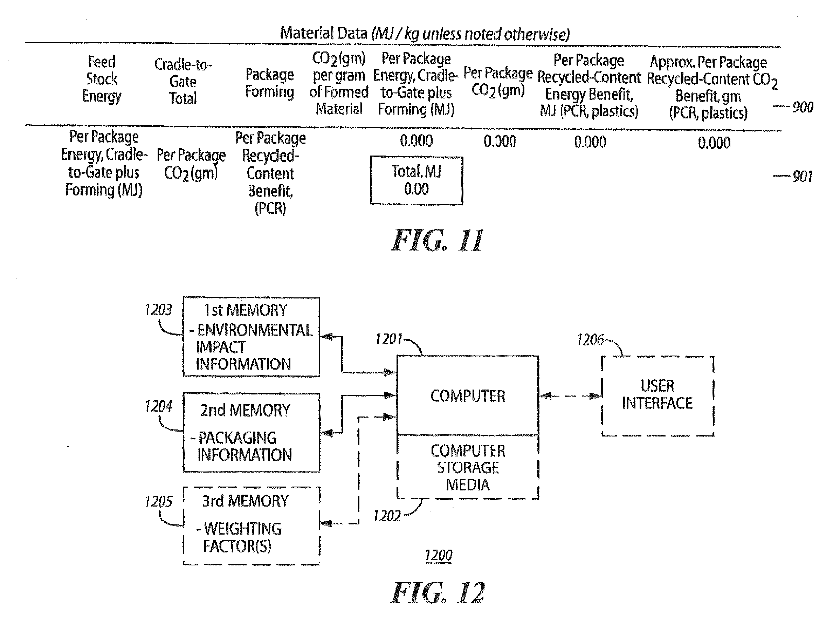

Those skilled in the art will appreciate that the above-described processes are readily enabled using any of a wide variety of available and/or readily configured platforms, including partially or wholly programmable platforms as are known in the art or dedicated purpose platforms as may be desired for some applications. Referring now to FIG. 12, an illustrative approach to such a platform will now be provided.

In this illustrative example the enabling apparatus 1200 comprises a computer 1201 that may include a computer storage media 1202 (such as an internal hard drive or a replaceable digital storage media of choice) and which operably couples to a first memory 1203 (that can contain, for example, the aforementioned environmental-impact information), a second memory 1204 (that can contain, for example, the aforementioned packaging information), and optionally to a third memory 1205 (that can contain, for example, the aforementioned weighting factors). If desired, this apparatus 1200 can further comprise a user interface 1206 that also operably couples to the computer 1201. This user interface 1206 can comprise an input mechanism (to receive, for example, data entry content from a user via, for example, a keyboard or the like) and/or an output mechanism (such as a display or printer).

Those skilled in the art will recognize and appreciate that such a computer 1201 can comprise a fixed-purpose hard-wired platform or can comprise a partially or wholly programmable platform. All of these architectural options are well known and understood in the art and require no further description here.

Those skilled in the art will recognize and understand that such an apparatus 1200 may be comprised of a plurality of physically distinct elements as is suggested by the illustration shown in FIG. 12. It is also possible, however, to view this illustration as comprising a logical view, in which case one or more of these elements can be enabled and realized via a shared platform. It will also be understood that such a shared platform may comprise a wholly or at least partially programmable platform as are known in the art.

The computer storage media 1202 can store, if desired, computer instructions for the computer 1201 to cause the latter to carry out one or more of the actions, steps, and/or functions described herein. This can include, for example, accessing the memories to obtain their stored contents and then processing the packaging information as a function, at least in part, of the environmental-impact information to calculate a single corresponding value to represent a score as pertains to the overall environmental impact of the packaging and to present that value to a user.

So configured, an enterprise can readily and easily obtain reliable information regarding the overall environmental impact of a particular packaging selection. This information is particularly useful to permit valid comparisons between different packaging systems and thereby avoids the technical difficulties in the past that have plagued such efforts. These teachings are also well suited for use in controlled processes where a reliable audit trail is necessary or desired.

Those skilled in the art will recognize that a wide variety of modifications, alterations, and combinations car be made with respect to the above described embodiments without departing from the spirit and scope of the invention, and that such modifications, alterations, and combinations are to be viewed as being within the ambit of the inventive concept.

## Claims

1. A method comprising:

    providing a first memory having environmental-impact information stored therein regarding at least provision of specific packaging materials, use of specific packaging materials, and post-use processing of specific packaging materials;

providing a second memory having packaging information stored therein;

using a computer to access the first memory and the second memory and to process the packaging information as a function, at least in part, of the environmental-impact information to calculate a single corresponding value to represent a score as pertains to overall environmental impact of the packaging;

presenting the single corresponding value to a user.

2. The method of claim 1 wherein the information regarding provision of specific packaging materials comprises, at least in part, information regarding at least one of:

an environmental impact associated with obtaining at least one raw material;

an environmental impact associated with processing at least one raw material;

an environmental impact associated with transporting at least one of a raw material and a processed raw material;

an environmental impact associated with creating the specific packaging material;

an environmental impact associated with an amount of post-consumer-recycled content in the specific packaging materials.

3. The method of claim 1 wherein the information regarding use of specific packaging materials comprises, at least in part, information regarding at least one of:

an environmental impact associated with energy requirements to use the specific packaging materials;

an environmental impact associated with associated waste as corresponds to use of the specific packaging materials.

4. The method of claim 1 wherein the information regarding post-use processing of specific packaging materials comprises, at least in part, at least one of:

an environmental impact associated with disposal of the specific packaging materials.

5. The method of claim 1 wherein the information regarding packaging information comprises, at least in part, information regarding at least one of:

a container for a product;

materials content.

6. The method of claim 1 further comprising:

providing a user interface that operably couples to the second memory to permit a user to enter the packaging information to facilitate storage of the packaging information in the second memory.

7. The method of claim 6 wherein the user interface comprises, at least in part, a spreadsheet-based interface.

8. The method of claim 1 further comprising:

providing a third memory having at least one weighting factor as pertains to environmental impact stored therein; and wherein using a computer to access the first memory and the second memory and to process the packaging information as a function, at least in part, of the environmental-impact information to calculate a single corresponding value to represent a score as pertains to overall environmental impact of the packaging comprises using a computer to access the first memory, the second memory, and the third memory and to process the packaging information as a function, at least in part, of the environmental-impact information and the at least one weighting factor to calculate a single corresponding value to represent a score as pertains to overall environmental impact of the packaging.

9. The method of claim 1 wherein using a computer to access the first memory and the second memory and to process the packaging information as a function, at least in part, of the environmental-impact information to calculate a single corresponding value to represent a score as pertains to overall environmental impact of the packaging comprises using the computer to access the first memory and the second memory and to process packaging information for a first packaging option as a function, at least in part, of the environmental-impact information to calculate a first single corresponding value to represent a score as pertains to overall environmental impact of the first packaging option;

using the computer to access the first memory and the second memory and to process packaging information for a second package option that comprises an alternative to the first packaging option as a function, at least in part, of the environmental-impact information to calculate a second single corresponding value to represent a score as pertains to overall environmental impact of the second packaging option.

**10.** An apparatus comprising:

    a first memory having environmental-impact information stored therein regarding at least provision of specific packaging materials, use of specific packaging materials, and post-use processing of specific packaging materials;

    a second memory having packaging information stored therein;

    a computer operably coupled to the first and second memories and being configured to:

        access the first memory and the second memory;

        process the packaging information as a function, at least in part, of the environmental-impact information to calculate a single corresponding value to represent a score as pertains to overall environmental impact of the packaging;

        present the single corresponding value to a user.

**11.** The apparatus of claim 10 wherein the information regarding provision of specific packaging materials comprises, at least in part, information regarding at least one of:

    an environmental impact associated with obtaining at least one raw material;

    an environmental impact associated with processing at least one raw material;

    an environmental impact associated with transporting at least one of a raw material and a processed raw material;

    an environmental impact associated with creating the specific packaging material;

    an environmental impact associated with an amount of post-consumer-recycled content in the specific packaging materials.

**12.** The apparatus of claim 11 wherein the information regarding use of specific packaging materials comprises, at least in part, information regarding at least one of:

    an environmental impact associated with energy requirements to use the specific packaging materials;

    an environmental impact associated with associated waste as corresponds to use of the specific packaging materials.

**13.** The apparatus of claim 12 wherein the information regarding post-use processing of specific packaging materials comprises, at least in part, at least one of:

    an environmental impact associated with disposal of the specific packaging materials.

**14.** The apparatus of claim 10 further comprising:

    a third memory having at least one weighting factor as pertains to environmental impact stored therein;

    and wherein the computer is operably coupled to the first, the second memory, and the third memory and is configured to process the packaging information as a function, at least in part, of the environmental-impact information and the at least one weighting factor to calculate a single corresponding value to represent a score as pertains to overall environmental impact of the packaging.

**15.** A computer storage media having stored therein computer instructions to:

    access a first memory having environmental-impact information stored therein regarding at least provision of specific packaging materials, use of specific packaging materials, and post-use processing of specific packaging materials;

    access a second memory having packaging information stored therein;

process the packaging information as a function, at least in part, of the environmental-impact information to calculate a single corresponding value to represent a score as pertains to overall environmental impact of the packaging;

present the single corresponding value to a user.

100 —
PROVIDE A FIRST MEMORY HAVING ENVIRONMENTAL-IMPACT INFORMATION STORED THEREIN REGARDING AT LEAST PROVISION OF SPECIFIC PACKAGING MATERIALS, USE OF SPECIFIC PACKAGING MATERIALS, AND POST-USE PROCESSING OF SPECIFIC PACKAGING MATERIALS

101 —
PROVIDE A USER INTERFACE THAT OPERABLY COUPLES TO A SECOND MEMORY TO PERMIT A USER TO ENTER PACKAGING INFORMATION TO FACILITATE STORAGE OF THE PACKAGING INFORMATION

102 —
PROVIDE A SECOND MEMORY HAVING PACKAGING INFORMATION STORED THEREIN

103 —
PROVIDE A THIRD MEMORY HAVING AT LEAST ONE WEIGHTING FACTOR AS PERTAINS TO ENVIRONMENTAL IMPACT STORED THEREIN

104 —
USE A COMPUTER TO ACCESS THE FIRST MEMORY AND THE SECOND MEMORY AND TO PROCESS THE PACKAGING INFORMATION AS A FUNCTION, AT LEAST IN PART, OF THE ENVIRONMENTAL-IMPACT INFORMATION TO CALCULATE A SINGLE CORRESPONDING VALUE TO REPRESENT A SCORE AS PERTAINS TO OVERALL ENVIRONMENTAL IMPACT OF THE PACKAGING

105 —
PRESENT THE SINGLE CORRESPONDING VALUE TO A USER TO FACILITATE THE USER'S SELECTION OF PARTICULAR PACKAGING MATERIALS

*FIG. 1*

## Instructions

1) Ensure that the worksheet tab (below) corresponds to the relevant business region
2) Enter the data relevant to the packaging system in the worksheet (cells w/ white background):
    Component weights by material (for shelf package plus shipper)
    *201* — Total and post-consumer recycled content where applicable
    Product net weight, case count and case cube (# of servings per pack can be entered if desired)
    Project name, annual volume and date of packaging change
3) Additional data entry instructions / data sources can be revealed
    by placing your cursor over the cell of interest
4) The overall Eco-Calculator Scores for the packaging system in question are given below, along
    with the formulas used to compute. A "#DIV/0!" message will appear if data entry is incomplete.

*202* — | Project: |

**Eco-Calc Score,** Net Weight Basis *(Lower score --> better environmental performance)*

Formula: (40% Material Use + 20% Recycled Content + 10% $CO_2$ + 10% Energy + 20% Case Cube / Net Wt.) / Net Wgt.

*203* — | | <-- In most cases, this is the number to reference

**Eco-Calc Score,** # of Servings Basis *(Lower score -->better environmental performance)*

Formula: (40% Material Use + 20% Recycled Content + 10% $CO_2$ + 10% Energy + 20% Case Cube / Net Wt.) / # Servings

*204* — | | <-- In scenarios involving changes in product
    concentration, this number can also be used

*200*

| | |
|---|---|
| Annual Material Use, (million lb): | 0.000 |
| Annual Landfill Contribution, (million lb): | 0.000 |
| Annual Recycled Content (PCR, million lb) | 0.000 |
| $CO_2$ & Energy Index: | 0.00 |
| Case Cube / Net Wt. ($cm^3$/gm): | ▼ |
| Product / Package Ratio: | ▼ |

*205*

## FIG. 2

EP 2 230 639 A1

Packaging System / Project Background Data ⌐301

*(This section allows for free text entries that capture the specific nuances of a given packaging system. This information can help to clarify the drivers behind the entries in the Eco-Calc.)*

300 **FIG. 3**

Project: [          ]

⌐402

| | | |
|---|---|---|
| Landfill Contribution, (million lb): | 000.0 | |
| Packaging Material Used, (million lb): | 000.0 | Indices ⌐403 |
| Post-Consumer Recycled Mt'l, (million lb): | 000.0 | $CO_2$ & Energy Index: | 0.00 |
| Landfill Contribution, (gm): | 0.0 | Case Cube / Net Weight, ($cm^3$/gm): | |
| Packaging Material Used, (gm): | 0.0 | Product / Package Ratio: | |
| Post-Consumer Recycled Content, (gm): | 0.0 | | |

Annual Impacts

Pre-Package Impacts

Annual Volume
(product weight in lb)   ⌐401
Year of Launch
Annual Volume (Number of Packages)

400

**FIG. 4**

| | |
|---|---|
| Landfill Contribution, (million lb): | |
| Packaging Material Used, (million lb): | |

⌐501
Amount of packaging material going to landfill, annualized (total material used less amount recycled)

**FIG. 5**

| Packaging Materials Used | Weight in Grams | Total Recycle Content. (%) | Post-Consumer Recycle Content. (%) | US Recycle Rate. (%) | US Recycle Amount, (gm) | Total Recycled Amount, (gm) | Post-Consumer Recycled Amount, (gm) |
|---|---|---|---|---|---|---|---|
| Aluminum: flexible | 0.00 | 29.00% | 11.00% | | | | |
| Aluminum: bottle / can, monolayer | 0.00 | 29.00% | 11.00% | 36.30% | 0 | 0 | 0 |
| Aluminum: composite can end | 0.00 | 29.00% | 11.00% | | 0 | 0 | 0 |
| Steel | 0.00 | 31.60% | 24.60% | 63.00% | 0 | 0 | 0 |
| Steel: composite can end | 0.00 | 31.60% | 24.60% | | 0 | 0 | 0 |
| "Other" Metal | 0.00 | | | | 0 | 0 | 0 |
| HDPE: bottle / jar, monolayer | 0.00 | 37.00% | 25.00% | 11.50% | 0 | 0 | 0 |
| HDPE: flexible | 0.00 | | | | 0 | 0 | 0 |
| LDPE: bottle / jar, monolayer | 0.00 | | | 5.80% | 0 | 0 | 0 |
| LDPE: flexible | 0.00 | | | | 0 | 0 | 0 |
| LLDPE: injection-molded | 0.00 | | | | 0 | 0 | 0 |
| LLDPE: flexible | 0.00 | | | | 0 | 0 | 0 |
| PET: bottle / jar, monolayer | 0.00 | | | 25.20% | 0 | 0 | 0 |
| PET: flexible, thermoformed | 0.00 | | | | 0 | 0 | 0 |
| PP: injection-molded / thermoformed | 0.00 | | | | 0 | 0 | 0 |
| PP: flexible | 0.00 | | | | 0 | 0 | 0 |

—600

—601

*FIG. 6*

EP 2 230 639 A1

| Packaging Materials Used | Weight in Grams | Total Recycle Content (%) | Post-Consumer Recycle Content (%) | US Recycle Rate (%) | US Recycle Amount (gm) | Total Recycled Amount (gm) | Post-Consumer Recycled Amount (gm) |
|---|---|---|---|---|---|---|---|
| PET: bottle / jar, monolayer | 0.00 | | | 25.20% | 0 | 0 | 0 |
| PET: flexible, thermoformed | 0.00 | | | | 0 | 0 | 0 |
| PP: injection-molded / thermoformed | 0.00 | | | | 0 | 0 | 0 |
| PP: flexible | 0.00 | | | | 0 | 0 | 0 |
| Expanded Polystyrene | 0.00 | | | | 0 | 0 | 0 |
| Polystyrene (HIPS) | 0.00 | | | | 0 | 0 | 0 |
| PVC: flexible | 0.00 | | | | 0 | 0 | 0 |
| PVdC | 0.00 | | | | 0 | 0 | 0 |
| "Other" Plastic | 0.00 | | | | 0 | 0 | 0 |
| Glass | 0.00 | 35.00% | 20.00% | 25.00% | 0 | 0 | 0 |
| Clay-Coated Recycled Paperboard | 0.00 | 100.00% | 35.00% | 11.90% | 0 | 0 | 0 |
| CCR, composite can body | 0.00 | 100.00% | 35.00% | | 0 | 0 | 0 |
| Solid Bleached Sulfate, virgin | 0.00 | 0.00% | 0.00% | 11.90% | 0 | 0 | 0 |
| Coated Unbleached Kraft virgin | 0.00 | 0.00% | 0.00% | 11.90% | 0 | 0 | 0 |
| "Other" Paper / Paperboard | 0.00 | | | | 0 | 0 | 0 |
| Corrugated Board | 0.00 | 38.00% | 38.00% | 71.50% | 0 | 0 | 0 |

—600

—601

*FIG. 7*

EP 2 230 639 A1

| Packaging Materials Used | Weight in Grams | Total Recycle Content. (%) | Post-Consumer Recycle Content. (%) | US Recycle Rate. (%) | US Recycle Amount, (gm) | Total Recycled Amount, (gm) | Post-Consumer Recycled Amount, (gm) |
|---|---|---|---|---|---|---|---|
| Corrugated Board | 0.00 | 38.00% | 38.00% | 71.50% | 0 | 0 | 0 |
| Shelf Pack Weight (Less Shipper) | 0.00 | | | | | | |
| Shelf Pack Weight (Total) | 0.00 | | | | | | |
| Pack-Out Data | | | | | | | |
| Product Net Weight (per pkg.) | 0.00 | | | | | | |
| Case Count | 0 | | | | | | |
| Case length & width & depth (O.D., cm2) | 0.00 | | | | | | |
| No. of Servings / Package (count) | 0.00 | | | | | | |
| Comments (List of "other" materials, etc.) | | | | | | | |

—600

| 0 | 0 | 0 |
|---|---|---|

803  804  805 —601

801
802
806

*FIG. 8*

Material Data *(MJ / kg unless noted otherwise)*

| | Feed Stock Energy | Cradle-to-Gate Total | Package Forming | $CO_2$(gm) per gram of Formed Material | Per Package Energy, Cradle-to-Gate plus Forming (MJ) | Per Package $CO_2$(gm) | Per Package Recycled-Content Energy Benefit, MJ (PCR, plastics) | Approx. Per Package Recycled-Content $CO_2$ Benefit, gm (PCR, plastics) |
|---|---|---|---|---|---|---|---|---|
| Aluminum | | 84.33 | 23.10 | 12.51 | 0.000 | 0.000 | | |
| Aluminum | | 84.33 | 10.46 | 12.01 | 0.000 | 0.000 | | |
| Aluminum | | 84.33 | 10.46 | 12.01 | 0.000 | 0.000 | | |
| Steel | | 26.60 | 6.2000 | 2.09 | 0.000 | 0.000 | | |
| Steel | | 26.60 | 6.2000 | 2.09 | 0.000 | 0.000 | | |
| "Other" Metal | | 55.47 | 8.3300 | 7.05 | 0.000 | 0.000 | | |
| HDPE | 55 | 74.54 | 6.1817 | 3.73 | 0.000 | 0.000 | 0.000 | 0.000 |
| HDPE | 55 | 74.54 | 5.5360 | 1.90 | 0.000 | 0.000 | 0.000 | 0.000 |
| LDPE | 55.58 | 81.88 | 20.2061 | 2.70 | 0.000 | 0.000 | 0.000 | 0.000 |
| LDPE | 55.58 | 81.88 | 5.5360 | 1.90 | 0.000 | 0.000 | 0.000 | 0.000 |
| LLDPE (rigid) | 55.1 | 74.06 | 20.2061 | 2.70 | 0.000 | 0.000 | 0.000 | 0.000 |
| LLDPE (firm) | 55.1 | 74.06 | 5.5360 | 1.90 | 0.000 | 0.000 | 0.000 | 0.000 |
| PET (bottle grade) | 39.76 | 82.71 | 21.2300 | 4.10 | 0.000 | 0.000 | 0.000 | 0.000 |
| PET (amorphous) | 39.66 | 80.75 | 28.3600 | 4.40 | 0.000 | 0.000 | 0.000 | 0.000 |
| pp | 54.51 | 71.59 | 21.5020 | 3.90 | 0.000 | 0.000 | 0.000 | 0.000 |
| pp | 54.51 | 71.59 | 8.9751 | 2.70 | 0.000 | 0.000 | 0.000 | 0.000 |

*FIG. 9*

Material Data *(MJ / kg unless noted otherwise)*

| | Feed Stock Energy | Cradle-to-Gate Total | Package Forming | $CO_2$(gm) per gram of Formed Material | Per Package Energy, Cradle-to-Gate plus Forming (MJ) | Per Package $CO_2$(gm) | Per Package Recycled-Content Energy Benefit, MJ (PCR, plastics) | Approx. Per Package Recycled-Content $CO_2$ Benefit, gm (PCR, plastics) |
|---|---|---|---|---|---|---|---|---|
| Expanded PS | 46.23 | 88.61 | 2.0339 | 3.40 | 0.000 | 0.000 | 0.000 | 0.000 |
| Polystyrene (HIPS) | 55.85 | 92.36 | 2.0339 | 3.40 | 0.000 | 0.000 | 0.000 | 0.000 |
| PVC | 28.85 | 56.73 | 12.7000 | 2.50 | 0.000 | 0.000 | 0.000 | 0.000 |
| PVdC | 21.51 | 80.6 | 0.0000 | 3.80 | 0.000 | 0.000 | 0.000 | 0.000 |
| "Other" Plastic | 45.01 | 78.38 | 13.45 | 3.46 | 0.000 | 0.000 | 0.000 | 0.000 |
| Glass | | 9.25 | 3.1800 | 0.86 | 0.000 | 0.000 | | |
| CCR | | 20.24 | | 1.62 | 0.000 | 0.000 | | |
| CCR | | 20.24 | | 1.62 | 0.000 | 0.000 | | |
| SBS | | 46.75 | | 2.87 | 0.000 | 0.000 | | |
| CUK | | 32.80 | | 2.55 | 0.000 | 0.000 | | |
| "Other" Paper | | 33.26 | | 2.35 | 0.000 | 0.000 | | |
| Corrugated Board | | 22.56 | | 1.73 | 0.000 | 0.000 | | |

900

901

*FIG. 10*

EP 2 230 639 A1

Material Data *(MJ / kg unless noted otherwise)*

| Feed Stock Energy | Cradle-to-Gate Total | Package Forming | $CO_2$ (gm) per gram of Formed Material | Per Package Energy, Cradle-to-Gate plus Forming (MJ) | Per Package $CO_2$ (gm) | Per Package Recycled-Content Energy Benefit, MJ (PCR, plastics) | Approx. Per Package Recycled-Content $CO_2$ Benefit, gm (PCR, plastics) |
|---|---|---|---|---|---|---|---|
| Per Package Energy, Cradle-to-Gate plus Forming (MJ) | Per Package $CO_2$ (gm) | Per Package Recycled-Content Benefit, (PCR) | 0.000 | 0.000 | 0.000 | 0.000 | |

—900

—901

Total. MJ 0.00

*FIG. 11*

*FIG. 12*

Europäisches
Patentamt

European
Patent Office

Office européen
des brevets

# EUROPEAN SEARCH REPORT

**Application Number**

EP 10 15 6472

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Notice from the European Patent Office dated 1 October 2007 concerning business methods" OFFICIAL JOURNAL OF THE EUROPEAN PATENT OFFICE, EPO, MUNCHEN, DE, vol. 30, no. 11, 1 November 2007 (2007-11-01), pages 592-593, XP007905525 ISSN: 0170-9291 * The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention. The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present application. The notoriety of such prior art cannot reasonably be contested. No documentary evidence was therefore considered required. * ----- | 1-15 | INV. G06Q10/00 |

**TECHNICAL FIELDS SEARCHED    (IPC)**

G06Q

The present search report has been drawn up for all claims

| Place of search | Date of completion of the search | Examiner |
|---|---|---|
| The Hague | 30 June 2010 | De Smet, Michaël |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)